# EUROPÄISCHE PATENTSCHRIFT

(11) **EP 3 445 536 B1**
(45) Veröffentlichungstag und Bekanntmachung des Hinweises auf die Patenterteilung: **17.04.2024**
(21) Anmeldenummer: 17723004.2
(22) Anmeldetag: 20.04.2017
(51) Int. Cl.: B25J 9/16, B60L 53/14, B60L 53/35, B60L 53/30, B60L 53/37, B60L 53/36

(54) **ZUFUHR VON ELEKTRISCHER ENERGIE UND/ODER KRAFTSTOFF ZU EINEM KRAFTFAHRZEUG MITTELS EINES ROBOTERS**
SUPPLYING ELECTRIC ENERGY AND/OR FUEL TO A MOTOR VEHICLE BY MEANS OF A ROBOT
ALIMENTATION D'UN VÉHICULE AUTOMOBILE EN ÉNERGIE ÉLECTRIQUE ET/OU EN CARBURANT AU MOYEN D'UN ROBOT

(30) Priorität: 22.04.2016 DE 102016004889
(43) Veröffentlichungstag der Anmeldung: 27.02.2019
(73) Patentinhaber: KUKA Deutschland GmbH, 86165 Augsburg (DE)
(72) Erfinder: SETTELE, Norbert, 86574 Petersdorf-Wilprechtszell (DE); KAMIS, Kazim, 31655 Stadthagen (DE); MUELLER, Marko, 39340 Haldensleben (DE)
(74) Vertreter: Schlotter, Alexander Carolus Paul
(86) Internationale Anmeldenummer: PCT/EP2017/000512
(87) Internationale Veröffentlichungsnummer: WO 2017/182127

(56) Entgegenhaltungen:
- EP-A1- 2 048 557
- EP-A2- 3 007 024
- DE-A1-102012 014 936
- US-A1- 2015 217 455
- TestDriven: "VW e-smartConnect (Video)", You Tube, 15. Juli 2015 (2015-07-15), Seite 1, XP054977524, Gefunden im Internet: URL:https://www.youtube.com/watch?v=Y4rDGJ -DH1Q [gefunden am 2017-07-06]
- The Red Ferret Journal: "VW Robot Car Charger - robot valet refuels your car while you shop (Video)", , 18. Juli 2015 (2015-07-18), Seiten 1-7, XP054977526, Gefunden im Internet: URL:https://www.youtube.com/watch?v=8UgT3U Lwp-Y [gefunden am 2017-07-07]
- Testdriven www.testdriven.co.uk: "VW demonstrates V-Charge valet charging", , 15. Juli 2015 (2015-07-15), XP055388451, Gefunden im Internet: URL:https://www.testdriven.co.uk/vw-v-char ge-valet-charging-parking/ [gefunden am 2017-07-06]
- Volkswagen www.volkswagen-media-services.com: "e-smartConnect: Volkswagen is conducting research on an automated quick-charging system for the next generation of electric vehicles", , 13. Juli 2015 (2015-07-13), XP055388466, Wolfsburg, Germany Gefunden im Internet: URL:https://www.volkswagen-media-services. com/en/detailpage/-/detail/e-smartConnect- Volkswagen-is-conducting-research-on-an-au tomated-quick-charging-system-for-the-next -generation-of-electric-vehicles/view/2448 500/7a5bbec13158edd433c6630f5ac445da [gefunden am 2017-07-06]
- The Red Ferret Journal: "VW Robot Car Charger - robot valet refuels your car while you shop [Video]", , 18. Juli 2015 (2015-07-18), XP055388728, Gefunden im Internet: URL:http://www.redferret.net/?p=50053 [gefunden am 2017-07-06]

## Beschreibung

Die vorliegende Erfindung betrifft ein Verfahren zur Zufuhr von elektrischer Energie und/oder Kraftstoff zu wenigstens einem Kraftfahrzeug mittels wenigstens eines Roboters einer Tankstelle sowie eine Tankstelle und ein Computerprogrammprodukt zur Durchführung eines Verfahrens.

Durch die Verwendung von Robotern kann eine Zufuhr von Kraftstoff zu bzw. ein Betanken von Kraftfahrzeugen mit Brennkraftmaschinen und insbesondere eine Zufuhr von elektrischer Energie zu bzw. ein (elektrisches) Aufladen von Kraftfahrzeugen mit Elektroantrieb verbessert werden.

Die DE 10 2012 014 936 A1 offenbart ein Ladesystem für ein Kraftfahrzeug, insbesondere einen Personenkraftwagen, das einen Roboter mit einem Steuermittel, ein Krafterfassungsmittel und einen an dem Roboter befestigten Stecker aufweist, der dazu eingerichtet ist, mit einem fahrzeugseitigen Gegenstecker eine lösbare Steckverbindung zum Aufladen eines elektrischen Energiespeichers des Kraftfahrzeugs herzustellen, wobei das Steuermittel dazu eingerichtet ist, mit dem Krafterfassungsmittel zu kommunizieren und den robotergeführten Stecker auf Basis einer von dem Krafterfassungsmittel ermittelten Kraft mit dem Gegenstecker zu verbinden.

Die Pressemitteilung "e-smartConnect: Volkswagen is conducting research on an automated quick-chraging system for the next generation of electrc vehilces" betrifft das elektrische Aufladen von Kraftfahrzeugen mittels eines Leichtbauroboters LBR iiwa von Kuka, wobei fahrzeugeigene Assistenzsysteme das automatische Parken unterstützen. Die Youtube-Videos "VW e-smartConnect" und "VW Robot Car Charger - robot valet refuels your car while you shop" illustrieren ein solches Aufladen.

Die US 2015/217455 A1 betrifft ein Verfahren zum Steuern eines Roboters, wobei eine Anzahl von Bildern eines dreidimensionalen Kamerasystems erhalten werden, ein verbundenes Objekt durch Analysieren eines Bildes identifiziert wird, das Bild mit einem vorhergehenden Bild verglichen wird, um ein sich bewegendes verbundenes Objekt zu identifizieren, und der Roboter zum Ausführen einer Aktion instruiert wird, falls in dem Bild ein unerwartetes sich bewegendes verbundenes Objekt ist.

Die EP 2 048 557 A1 betrifft einen optoelektronischen Sensor zur Überwachung eines Raumbereichs, wobei Positionsdaten von einem Handgerät in dem Raumbereich empfangen werden.

Die EP 3 007 024 A2 betrifft ein Verfahren zur Positionierung eines Kraftfahrzeugs zum kontaktlosen Laden, wobei Markierungssensordaten, die eine Markierung im Umfeld einer Ladplatte beschreiben, erfasst, eine eine relative Lage der Ladeplatte zur Markierung beschreibende Lageinformation geladen, aus den Markierungssensordaten eine eine relative Lage der Markierung bezüglich des Kraftfahrzeugs beschreibende Markierungsinformation bestimmt, aus der Markierungsinformation und Lageinformation eine eine relative Lage der Ladeplatte zu dem Kraftfahrzeug beschreibende Ladeplatteninformation bestimmt und das Kraftfahrzeug durch Auslösen eines von der Ladeplatteninformation abhängigen Fahrhinweises in die Ladeposition geführt wird.

Aufgabe der vorliegenden Erfindung ist es, ein robotergestütztes Betanken von Kraftfahrzeugen mit Kraftstoff und/oder ein elektrisches Aufladen von Kraftfahrzeugen mit Elektroantrieb, insbesondere Elektro- und/oder Hybridfahrzeugen, zu verbessern.

Diese Aufgabe wird durch ein Verfahren mit den Merkmalen des Anspruchs 1 gelöst. Ansprüche 9, 10 stellen eine Tankstelle und ein Computerprogrammprodukt zur Durchführung eines hier beschriebenen Verfahrens unter Schutz. Die Unteransprüche betreffen vorteilhafte Weiterbildungen.

Nach einer Ausführung der vorliegenden Erfindung weist eine Tankstelle einen oder mehrere Roboter auf, die jeweils wenigstens eine Schnittstelle, insbesondere einen Elektrostecker und/oder einen Tankstutzen, (roboter)führen, um an einem oder mehreren Tankplätzen der Tankstelle Kraftfahrzeuge wenigstens teilweise automatisiert mit Kraftstoff und/oder elektrischer Energie zu versorgen. In einer Ausführung weist die Tankstelle eine zentrale oder dezentrale Steuerung zum Steuern des Roboters bzw. eines oder mehrerer der Roboter auf, wobei die Tankstelle, insbesondere ihre Steuerung, insbesondere hard- und/oder software-, insbesondere programmtechnisch, zur Durchführung einer oder mehrerer Schritte eines hier beschriebenen Verfahrens eingerichtet ist.

Ein Roboter weist in einer Ausführung wenigstens drei, insbesondere wenigstens sechs, insbesondere wenigstens sieben, Gelenke bzw. Bewegungsachsen, insbesondere Drehgelenke bzw. -achsen, und Antriebe zum Aktuieren dieser Gelenke bzw. Bewegungsachsen auf. Durch sechsgelenkige Roboter kann eine robotergeführte Schnittstelle vorteilhaft positioniert werden, durch einen sieben- oder mehrgelenkigen vorteilhaft in unterschiedlichen Posen, insbesondere zur Vermeidung von Kollisionen mit dem Kraftfahrzeug.

In einer Ausführung ist wenigstens eine, insbesondere erste bzw. untergrundnächste bzw. proximale, Bewegungsachse des Roboters eine Linearachse. Hierdurch kann der Roboter bzw. seine Schnittstelle vorteilhaft an das zu betankende bzw. aufzuladende Kraftfahrzeug heranfahren.

Nach einer Ausführung der vorliegenden Erfindung umfasst ein Verfahren zur Zufuhr von elektrischer Energie bzw. zum elektrischen Aufladen eines oder mehrerer Kraftfahrzeugen und/oder zur Zufuhr von Kraftstoff zu bzw. zum Betanken von einem oder mehreren Kraftfahrzeugen mittels (jeweils) eines oder mehrerer Roboter der Tankstelle die Schritte: Ermitteln mehrerer zeitlich aufeinanderfolgender Positionen wenigstens eines Kraftfahrzeugs relativ zu wenigstens einem Roboter und optional eines Typs des Kraftfahrzeugs; Verbinden einer durch diesen Roboter geführten Schnittstelle mit diesem Kraftfahrzeug; und Zuführen von elektrischer Energie und/oder Kraftstoff zu dem Kraftfahrzeug über diese mit dem Kraftfahrzeug verbundene robotergeführte Schnittstelle.

Entsprechend weist die Tankstelle, insbesondere ihre Steuerung, in einer Ausführung auf: Mittel zum Ermitteln mehrerer zeitlich aufeinanderfolgender Positionen wenigstens eines Kraftfahrzeugs relativ zu wenigstens einem Roboter und gegebenenfalls eines Typs des Kraftfahrzeugs; Mittel zum Verbinden einer durch diesen Roboter geführten Schnittstelle mit diesem Kraftfahrzeug; und Mittel zum Zuführen von elektrischer Energie und/oder Kraftstoff zu dem Kraftfahrzeug über diese mit dem Kraftfahrzeug verbundene robotergeführte Schnittstelle.

Hierdurch kann in einer Ausführung ein Betanken und/oder Aufladen von Kraftfahrzeugen verbessert werden, insbesondere dessen Sicherheit, Geschwindigkeit und/oder Komfort.

Nach einer Ausführung der vorliegenden Erfindung umfasst das Verfahren den Schritt: Steuern des Roboters in Abhängigkeit von einer Geschwindigkeit des Kraftfahrzeugs, die aus diesen ermittelten Positionen des Kraftfahrzeugs ermittelt wird, optional auch in Abhängigkeit von dem ermittelten Typ des Kraftfahrzeugs. Entsprechend umfasst das Verfahren den Schritt: Ermitteln einer Geschwindigkeit des Kraftfahrzeugs, insbesondere relativ zum Roboter, aus bzw. in Abhängigkeit von den ermittelten Positionen des Kraftfahrzeugs.

Zusätzlich umfasst das Verfahren nach einer Ausführung der vorliegenden Erfindung den Schritt: Übermitteln von Navigationsdaten an das Kraftfahrzeug in Abhängigkeit von den ermittelten Positionen des Kraftfahrzeugs relativ zu dem Roboter, insbesondere in Abhängigkeit von einer Geschwindigkeit des Kraftfahrzeugs, die aus diesen ermittelten Positionen des Kraftfahrzeugs ermittelt wird, und/oder drahtlos.

Entsprechend weist die Tankstelle, insbesondere ihre Steuerung, in einer Ausführung auf: Mittel zum Steuern des Roboters in Abhängigkeit von einer Geschwindigkeit des Kraftfahrzeugs, die aus diesen ermittelten Positionen des Kraftfahrzeugs ermittelt wird, optional auch in Abhängigkeit von dem ermittelten Typ des Kraftfahrzeugs; sowie Mittel zum Ermitteln einer Geschwindigkeit des Kraftfahrzeugs, insbesondere relativ zum Roboter, aus bzw. in Abhängigkeit von den ermittelten Positionen des Kraftfahrzeugs, und optional Mittel zum, insbesondere drahtlosen, Übermitteln von Navigationsdaten an das Kraftfahrzeug in Abhängigkeit von den ermittelten Positionen des Kraftfahrzeugs relativ zu dem Roboter.

Indem ein Typ des zu betankenden bzw. aufzuladenden Kraftfahrzeugs ermittelt und der Roboter in Abhängigkeit von diesem ermittelten Typ gesteuert wird, können in einer Ausführung vorteilhaft hinterlegte bzw. gespeicherte typspezifische Informationen zur Steuerung des Roboters genutzt werden.

So kann in einer Ausführung beispielsweise eine typspezifisch (vorgegebene bzw. bekannte Position einer Gegenschnittstelle des Kraftfahrzeugs genutzt werden, um die robotergeführte Schnittstelle besser, insbesondere schneller und/oder präziser, zu positionieren. Zusätzlich oder alternativ können beispielsweise typspezifisch (vorgegebene bzw. bekannte Abmessungen des Kraftfahrzeugs genutzt werden, um den Roboter besser zu steuern, beispielsweise Kollisionen mit dem Kraftfahrzeug zu vermeiden, günstige Posen zum Betanken bzw. Aufladen vorzugeben oder dergleichen.

Indem mehrere zeitlich aufeinanderfolgende Positionen des zu betankenden bzw. aufzuladenden Kraftfahrzeugs relativ zu einem Roboter ermittelt und der Roboter in Abhängigkeit von diesen ermittelten Positionen, insbesondere in Abhängigkeit von einer Geschwindigkeit des Kraftfahrzeugs, die aus diesen ermittelten Positionen des Kraftfahrzeugs ermittelt wird, gesteuert wird, kann in einer Ausführung vorteilhaft das Risiko einer Kollision des Roboters mit dem Kraftfahrzeug reduziert werden. Zusätzlich oder alternativ kann hierdurch in einer Ausführung die robotergeführte Schnittstelle besser, insbesondere schneller und/oder präziser, positioniert werden.

Indem in Abhängigkeit von den ermittelten Positionen des Kraftfahrzeugs relativ zu dem Roboter Navigationsdaten an das Kraftfahrzeug übermittelt werden, kann ein Parken des Kraftfahrzeugs zum Betanken bzw. Aufladen mittels des Roboters unterstützt werden.

So können in einer Ausführung beispielsweise auf Basis einer Abweichung zwischen einer ermittelten aktuellen oder prognostizierten zukünftigen Position des Kraftfahrzeugs und einer Zielposition zum Betanken bzw. Aufladen mittels des Roboters eine Zielführung des Kraftfahrzeugs durchgeführt und hierzu entsprechende Navigationsdaten an das Kraftfahrzeug übermittelt werden, die von dieser Abweichung abhängen, insbesondere diese angeben. Diese können fahrzeugseitig autonom oder durch dessen Fahrer umgesetzt werden. In einer Weiterbildung können die Navigationsdaten insbesondere Steuer-, insbesondere Lenk- und/oder Beschleunigungs- bzw. Bremsbefehle, für das Kraftfahrzeug zum Ansteuern einer vorgegebenen Soll(park)position, insbesondere zur Reduzierung, insbesondere Minimierung, der Abweichung zwischen einer ermittelten aktuellen oder prognostizierten zukünftigen Position des Kraftfahrzeugs und einer Zielposition zum Betanken bzw. Aufladen mittels des Roboters, enthalten, insbesondere sein.

Erfindungsgemäß werden die Positionen eines oder mehrerer zu betankender und/oder aufzuladender Kraftfahrzeuge relativ zu einem oder mehreren Robotern zum Betanken bzw. Aufladen des bzw. der Kraftfahrzeuge und optional der Typ mittels (wenigstens) eines Tiefensensors ermittelt.

Entsprechend weist die Tankstelle (wenigstens) einen Tiefensensor und, insbesondere ihre Steuerung, Mittel zum Ermitteln der Positionen eines oder mehrerer zu betankender und/oder aufzuladender Kraftfahrzeuge relativ zu einem oder mehreren Robotern zum Betanken bzw. Aufladen des bzw. der Kraftfahrzeuge und gegebenenfalls dessen Typs bzw. deren Typen mittels des Tiefensensors bzw. der Tiefensensoren auf.

Ein Tiefensensor kann den Typ und/oder die Positionen insbesondere mittels elektromagnetischer Strahlung, insbesondere Infrarotstrahlung ermitteln. Dabei kann in einer Weiterbildung die elektromagnetische Strahlung, insbesondere Infrarotstrahlung, insbesondere ein vorgegebenes Muster, ausgestrahlt, die auf dem Objekt auftreffende Strahlung, insbesondere das auf das Objekt projizierte Muster, insbesondere mittels eines optischen Sensors, insbesondere eines CCD-Sensors, detektiert, und hieraus, insbesondere auf Basis einer Verzerrung des Musters, einem zeitlichen Abstand zwischen Ausstrahlen der Strahlung und Detektieren der Strahlung auf dem Objekt oder dergleichen, dessen, insbesondere dreidimensionaler bzw. räumlicher, Abstand zum Tiefensensor ermittelt werden. In einer Weiterbildung können der Typ und/oder die Positionen insbesondere mittels eines Tiefensensors in der Art einer Tiefenbildkamera ermittelt werden, wie er von der Firma PrimeSense aus Israel unter dem Namen Kinect bekannt ist.

Mittels des Tiefensensors können in einer Ausführung typspezifische Merkmale des Kraftfahrzeugs, beispielsweise Abmessungen und/oder die Anordnung von Rädern, Scheiben, Türen, Spiegeln, seine Kontur oder dergleichen ermittelt und hieraus der Typ des Kraftfahrzeugs ermittelt werden. Beispielsweise können durch den Tiefensensor die Abmessungen eines oder mehrerer typspezifischer Merkmale ermittelt und mit hinterlegten bzw. vorgegebenen bzw. abgespeicherten Merkmalen verschiedener Kraftfahrzeugtypen verglichen und dann der Typ mit der größten Übereinstimmung als der Typ des zu betankenden bzw. aufzuladenden Kraftfahrzeugs ermittelt werden
Entsprechend weist die Tankstelle, insbesondere ihre Steuerung, in einer Ausführung auf: Mittel zum Ermitteln von typspezifischen Merkmalen des Kraftfahrzeugs, beispielsweise Abmessungen und/oder Anordnung von Rädern, Scheiben, Türen, Spiegeln, seiner Kontur oder dergleichen, mittels des Tiefensensors und zum Ermitteln des Typ des Kraftfahrzeugs hieraus, insbesondere durch Vergleichen mit hinterlegten bzw. vorgegebenen bzw. abgespeicherten Merkmalen verschiedener Kraftfahrzeugtypen und zum Ermitteln des Typs mit der größten Übereinstimmung als den Typ des zu betankenden bzw. aufzuladenden Kraftfahrzeugs.

In einer Ausführung ermittelt ein bzw. der Tiefensensor kartesische oder horizontale Abstände, die er in einer Weiterbildung in einer zweidimensionalen Abstandskarte ausgibt, wie dies insbesondere von Kinect-Tiefensensoren bekannt ist, bzw. ist hierzu eingerichtet. Entsprechend wird unter einer (ermittelten) Position eines Kraftfahrzeugs relativ zu einem Roboter vorliegend insbesondere seine ein-, zwei- oder dreidimensionale Lage und/oder Orientierung relativ zu dem Roboter, insbesondere sein ein-, zwei- oder dreidimensionaler Abstand bzw. Versatz bzw. sein Abstand bzw. Versatz in einer, zwei oder drei R(aumr)ichtungen, insbesondere sein horizontaler oder kartesischer bzw. räumlicher Abstand bzw. Versatz, verstanden, unter einer Geschwindigkeit des Kraftfahrzeugs insbesondere dessen ein-, zwei- oder dreidimensionale translatorische und/oder rotatorische Geschwindigkeit.

In einer Ausführung ist der Tiefensensor fest oder lösbar mit dem bzw. einem der Roboter, insbesondere dessen Endeffektor bzw. -glied, verbunden bzw. robotergeführt. Hierdurch kann der Roboter vorteilhaft zum Bewegen, insbesondere Ausrichten, des Tiefensensors genutzt werden.

Gleichermaßen kann der Tiefensensor fest oder lösbar mit der Umgebung bzw. einer Struktur der Tankstelle, beispielsweise einem Boden, einer Wand, einem umgebungsfesten Stativ oder dergleichen, verbunden bzw. umgebungsfest bzw. von einer Pose des Roboters unabhängig sein. Hierdurch können der bzw. die Roboter vorteilhaft unabhängig vom Tiefensensor genutzt und/oder dieser vorteilhaft platziert und/oder geschützt werden.

Alternativ oder zusätzlich kann zumindest ein Tiefensensor verlagerbar mit der Umgebung, beispielsweise einem Boden, einer Wand oder einer Decke verbunden sein, insbesondere mittels einer Verlagerungsvorrichtung. Die Verlagerungsvorrichtung kann beispielsweise eine vom Roboter bzw. einer Linearachse des Roboters verschiedene Linearachse oder einen Schwenkarm umfassen.

In einer Ausführung wird die Geschwindigkeit des Kraftfahrzeugs auf Basis von zwei oder mehr zeitlich aufeinanderfolgenden ermittelten Positionen des Kraftfahrzeugs ermittelt, insbesondere durch Subtraktion der Positionen und gegebenenfalls Division durch die Zeitdifferenz zwischen den Positionen bzw. den Zeitpunkten, zu denen diese erfasst worden sind. Entsprechend weist die Tankstelle, insbesondere ihre Steuerung, in einer Ausführung auf: Mittel zum Ermitteln der Geschwindigkeit des Kraftfahrzeugs auf Basis von zwei oder mehr zeitlich aufeinanderfolgenden ermittelten Positionen des Kraftfahrzeugs, insbesondere durch Subtraktion der Positionen und gegebenenfalls Division durch die Zeitdifferenz zwischen den Positionen bzw. den Zeitpunkten, zu denen diese erfasst worden sind. Hierdurch können in einer Ausführung vorteilhaft ermittelte Positionen zusätzlich zur Ermittlung der Geschwindigkeit genutzt werden.

Erfindungsgemäß werden Positionen des Kraftfahrzeugs relativ zu dem Roboter und optional der Typ des Kraftfahrzeugs ermittelt, das sich vollständig außerhalb eines Arbeitsraums des Roboters und wenigstens teilweise in einem (durch den bzw. die Tiefensensor(en) überwachten) Überwachungsraum befindet, der außerhalb des Arbeitsraums des Roboters angeordnet ist. Entsprechend weist die Tankstelle, insbesondere ihre Steuerung, in einer Ausführung auf: Mittel zum Ermitteln von Positionen des Kraftfahrzeugs (relativ zu dem Roboter) und gegebenenfalls des Typs des Kraftfahrzeugs, das sich vollständig außerhalb eines Arbeitsraums des Roboters und wenigstens teilweise in einem (durch den bzw. die Tiefensensor(en) überwachten) Überwachungsraum befindet, der außerhalb des Arbeitsraums des Roboters angeordnet ist.

Der Arbeitsraum eines Roboters ist in einer Ausführung derjenige kartesische Raum, der durch den Roboter, insbesondere seine distale Schnittstelle, maximal abfahr- bzw. überstreich- bzw. erreichbar ist. Der Arbeitsraum kann durch die maximale Reichweite des Roboters, gegebenenfalls einschließlich des Endeffektors und/oder der geführten Tankpistole und/oder den geführten elektrischen Verbinder, vorgegeben sein. Der Arbeitsraum kann auch variabel sein, wobei der Arbeitsraum zweckmäßigerweise zu jedem Zeitpunkt vorbestimmt ist. Beispielsweise kann der Arbeitsraum durch ein Steuerungsprogramm zur Steuerung der Bewegungen des Roboters vorgegeben sein. Insbesondere kann der Arbeitsraum gegenüber der maximalen Reichweite des Roboters verringert sein, wenn das Steuerungsprogramm lediglich eine Bewegung des Roboters in einem dazu kleinerem Arbeitsraum vorsieht. Alternativ oder zusätzlich kann der Roboter nicht ortsfest sein. Beispielsweise kann der Roboter auf einer mobilen Plattform angeordnet sein. Diese mobile Plattform kann bevorzugt als Fahrzeug, insbesondere als omnidirektionales Fahrzeug, oder als Linearachse ausgebildet sein, wobei die Linearachse am Boden, an einer Wand oder an einer Decke montiert sein kann. Dementsprechend kann der Arbeitsraum relativ zum Roboter konstant und dennoch relativ zur Umgebung örtlich variabel sein.

Durch eine Ermittlung von Positionen, insbesondere der Geschwindigkeit, des Kraftfahrzeugs, das sich (noch) vollständig außerhalb des Arbeitsraums und (bereits) wenigstens teilweise in einem außerhalb des Arbeitsraums des Roboters angeordneten Überwachungsraums befindet, und gegebenenfalls seines Typs, kann in einer Ausführung roboterseitig vorteilhaft frühzeitig, insbesondere, bevor eine Kollision des Kraftfahrzeugs mit dem Roboter überhaupt möglich ist, auf das Kraftfahrzeug reagiert werden.

Der Überwachungsraum grenzt bzw. schließt in einer Ausführung vollständig bzw. mit seiner gesamten arbeitsraumzugewandten Außengrenze oder teilweise bzw. mit einem Teil bzw. (Teil)Bereich seiner arbeitsraumzugewandten Außengrenze an den Arbeitsraum bzw. dessen überwachungsraumzugewandte Außengrenze an. Zusätzlich oder alternativ umgibt bzw. -schließt bzw. überdeckt der Überwachungsraum in einer Ausführung eine zugängliche Außengrenze des Arbeitsraums vollständig bzw. dessen gesamte zugängliche Außengrenze oder teilweise bzw. einen Teil bzw. (Teil)Bereich der zugänglichen Außengrenze des Arbeitsraums. Eine zugängliche Außengrenze des Arbeitsraums ist in einer Ausführung derjenige Teil einer Außengrenze des Arbeitsraums, der für Kraftfahrzeuge mit einer Stirnfläche von wenigstens 1 m² zugänglich und/oder nicht durch, insbesondere feste, Wände, insbesondere einen Boden, Zaun oder dergleichen abgedeckt bzw. definiert ist.

Hierdurch können in einer Ausführung das Risiko, ein sich dem Arbeitsraum näherndes Kraftfahrzeug nicht (frühzeitig) zu erfassen, reduziert bzw. gezielt überwachungsfreie Zugänge zu dem Arbeitsraum und/oder eine vorteilhafte, insbesondere symmetrische, Kontur des Überwachungsraums definiert werden.

Der Überwachungsraum weist in einer Ausführung eine, wenigstens im Wesentlichen, (teil)sphärische bzw. (teil)kugelförmige oder zylindrische oder rechteckförmige arbeitsraumzu- und/oder -abgewandte Außengrenze auf. Hierdurch kann der Überwachungsraum in einer Ausführung vorteilhaft, insbesondere einfacher, überwacht, insbesondere abgetastet, und/oder von Personen berücksichtigt bzw. respektiert werden.

In einer Ausführung weist eine arbeitsraumabgewandte Außengrenze des Überwachungsraum von einer überwachungsraumzugewandten Außengrenze des Arbeitsraums einen maximalen Abstand auf, der wenigstens 0,1 m, insbesondere wenigstens 1 m, insbesondere wenigstens 2 m, insbesondere wenigstens 4 m, und/oder höchstens 10 m, insbesondere höchstens 8 m, insbesondere höchstens 6 m, beträgt. Zusätzlich oder alternativ weist in einer Ausführung eine bzw. die arbeitsraumabgewandte Außengrenze des Überwachungsraum von einer bzw. der überwachungsraumzugewandten Außengrenze des Arbeitsraums einen minimalen Abstand auf, der wenigstens 0,1 m, insbesondere wenigstens 1 m, insbesondere wenigstens 2 m, insbesondere wenigstens 4 m, und/oder höchstens 10 m, insbesondere höchstens 8 m, insbesondere höchstens 6 m, beträgt.

In einer Ausführung ragt bzw. reicht der Überwachungsraum wenigstens horizontal, insbesondere räumlich, um wenigstens 0,1 m, insbesondere wenigstens 1 m, insbesondere wenigstens 2 m, insbesondere wenigstens 4 m, und/oder um höchstens 10 m, insbesondere höchstens 8 m, insbesondere höchstens 6 m, über den Arbeitsraum hinaus.

Ein bzw. der Abstand zwischen einem Punkt der arbeitsraumabgewandten Außengrenze des Überwachungsraums von der überwachungsraumzugewandten Außengrenze des Arbeitsraums ist in einer Ausführung der horizontale oder kartesische Abstand zu dem diesem Punkt nächsten bzw. nächstgelegenen Punkt der überwachungsraumzugewandten Außengrenze des Arbeitsraums. Entsprechend ist der maximale Abstand der arbeitsraumabgewandten Außengrenze des Überwachungsraums von der überwachungsraumzugewandten Außengrenze des Arbeitsraums der größte horizontale oder kartesische Abstand zwischen einem Punkt der arbeitsraumabgewandten Außengrenze des Überwachungsraums und dem ihm nächsten bzw. nächstgelegenen Punkt der überwachungsraumzugewandten Außengrenze des Arbeitsraums, der minimale Abstand der arbeitsraumabgewandten Außengrenze des Überwachungsraums von der überwachungsraumzugewandten Außengrenze des Arbeitsraums entsprechend der kleinste horizontale oder kartesische Abstand zwischen einem Punkt der arbeitsraumabgewandten Außengrenze des Überwachungsraums und dem ihm nächsten bzw. nächstgelegenen Punkt der überwachungsraumzugewandten Außengrenze des Arbeitsraums.

Zusätzlich oder alternativ weist in einer Ausführung eine bzw. die arbeitsraumabgewandte Außengrenze des Überwachungsraums einen, insbesondere minimalen, maximalen oder mittleren, horizontalen oder kartesischen Abstand zu einem geometrischen Volumenmittelpunkt des Arbeitsraums oder einer roboterfesten Referenz, insbesondere zu einem Punkt einer Basis oder zu einer basisnächsten ersten Achse des Roboters, auf, der um wenigstens 0,1 m, insbesondere wenigstens 1 m, insbesondere wenigstens 2 m, insbesondere wenigstens 4 m, und/oder höchstens 10 m, insbesondere höchstens 8 m, insbesondere höchstens 6 m, größer ist als ein, insbesondere maximaler, minimaler oder mittlerer, horizontaler oder kartesischer Abstand einer bzw. der überwachungsraumzugewandten Außengrenze des Arbeitsraums zu dem Volumenmittelpunkt bzw. der roboterfesten Referenz.

In einer Weiterbildung weist die arbeitsraumabgewandte Außengrenze des Überwachungsraums von einer proximalen bzw. basisnächsten bzw. ersten Achse des Roboters oder einem Punkt auf dieser Achse, der auf Höhe der darauffolgenden bzw. zweiten Achse oder auf Höhe einer Standfläche der Basis des Roboters liegt, einen minimalen horizontalen oder kartesischen Abstand auf, der um wenigstens 0,1 m, insbesondere wenigstens 1 m, insbesondere wenigstens 2 m, insbesondere wenigstens 4 m, und/oder höchstens 10 m, insbesondere höchstens 8 m, insbesondere höchstens 6 m, größer ist als eine maximale Auslage bzw. ein, insbesondere steuerungstechnisch oder konstruktiv bedingter, maximaler Abstand der robotergeführten Schnittstelle von dieser Achse bzw. diesem Punkt.

Entsprechend der konstanten oder variablen Ausgestaltung des Arbeitsraumes kann der Überwachungsraum mit Bezug auf die Umgebung konstant oder variabel sein. Mit anderen Worten kann der Überwachungsraum im Umgebungsraum variabel sein, beispielsweise, wenn der Arbeitsraum aufgrund der Bewegung des Roboters im Raum bewegt wird und/oder aufgrund des Steuerungsprogramms vergrößert bzw. verkleinert wird.

Durch die vorstehend genannten Werte kann in einer Ausführung insbesondere eine rechtzeitige und/oder zuverlässige Erfassung eines potentiell in den Arbeitsraum eindringenden Kraftfahrzeugs realisiert und/oder die Wahrscheinlichkeit einer unnötigen Reaktion auf ein nicht zu betankendes bzw. aufzuladendes Kraftfahrzeug reduziert werden.

Erfindungsgemäß weist das Verfahren die Schritte auf: Prognostizieren eines (wenigstens teilweisen) Eintritts des Kraftfahrzeugs in den Arbeitsraum des Roboters in Abhängigkeit von wenigstens einer ermittelten Position und einer aus ermittelten Positionen ermittelten Geschwindigkeit des Kraftfahrzeugs, das sich vollständig außerhalb des Arbeitsraums und wenigstens teilweise in dem Überwachungsraum befindet; und Überführen des Roboters in einen sicheren Zustand, insbesondere Anfahren einer vorgegebenen Pose des Roboters, Reduzieren einer Geschwindigkeit, insbesondere Stillsetzen, des Roboters und/oder Sperren eines Teils des Arbeitsraums des Roboters, in Abhängigkeit von dem prognostizierten Eintritt, insbesondere dessen Zeitpunkt und/oder Ort.

Entsprechend weist die Tankstelle, insbesondere ihre Steuerung, in einer Ausführung auf: Mittel zum Prognostizieren eines (wenigstens teilweisen) Eintritts des Kraftfahrzeugs in den Arbeitsraum des Roboters in Abhängigkeit von wenigstens einer ermittelten Position und einer aus ermittelten Positionen ermittelten Geschwindigkeit des Kraftfahrzeugs, das sich vollständig außerhalb des Arbeitsraums und wenigstens teilweise in dem Überwachungsraum befindet; und Mittel zum Überführen des Roboters in einen sicheren Zustand, insbesondere Anfahren einer vorgegebenen Pose des Roboters, Reduzieren einer Geschwindigkeit, insbesondere Stillsetzen, des Roboters und/oder Sperren eines Teils des Arbeitsraums des Roboters, in Abhängigkeit von dem prognostizierten Eintritt, insbesondere dessen Zeitpunkt und/oder Ort.

Insbesondere kann in einer Ausführung der Roboter zu bzw. bei dem prognostizierten Zeitpunkt eines Eintritts oder um eine vorgegebene Zeitdauer vor oder nach diesem prognostizierten Zeitpunkt eines Eintritts des Kraftfahrzeugs in einen sicheren Zustand überführt, insbesondere eine vorgegebenen Pose des Roboters angefahren, eine Geschwindigkeit des Roboters reduziert, insbesondere der Roboter stillgesetzt, und/oder ein Teil des Arbeitsraums des Roboters gesperrt werden. Zusätzlich oder alternativ kann der sichere Zustand, insbesondere die anzufahrende Pose, die Geschwindigkeitsreduzierung und/oder die Sperrung eines Teils des Arbeitsraums von dem prognostizierten Ort eines Eintritts abhängen bzw. vorgegeben werden bzw. sein. So kann insbesondere der gesperrte Teil den prognostizierten Ort des Eintritts enthalten und/oder relativ zu diesem vorgegeben sein bzw. werden.

Entsprechend weist die Tankstelle, insbesondere ihre Steuerung, in einer Ausführung auf: Mittel zum Überführen des Roboters in einen sicheren Zustand, insbesondere zum Anfahren einer vorgegebenen Pose des Roboters, Reduzieren eine Geschwindigkeit des Roboters, insbesondere Stillsetzen des Roboter, und/oder Sperren eines Teils des Arbeitsraums des Roboters, zu bzw. bei dem prognostizierten Zeitpunkt eines Eintritts oder um eine vorgegebene Zeitdauer vor oder nach diesem prognostizierten Zeitpunkt eines Eintritts und/oder zum Vorgeben des sicheren Zustands, insbesondere der anzufahrenden Pose, der Geschwindigkeitsreduzierung und/oder der Sperrung eines Teils des Arbeitsraums in Abhängigkeit von dem prognostizierten Ort eines Eintritts, insbesondere relativ zu diesem und/oder derart, dass der gesperrte Teil den prognostizierten Ort des Eintritts enthält.

Zusätzlich zu einer Ermittlung von Positionen, insbesondere einer Geschwindigkeit, des Kraftfahrzeugs, das sich vollständig außerhalb des Arbeitsraums und wenigstens teilweise in dem Überwachungsraum außerhalb des Arbeitsraums des Roboters befindet, sowie gegebenenfalls einer Ermittlung des Typs des Kraftfahrzeugs, das sich vollständig außerhalb des Arbeitsraums und wenigstens teilweise in dem Überwachungsraum außerhalb des Arbeitsraums des Roboters befindet, werden in einer Ausführung der Typ und/oder Positionen, insbesondere eine Geschwindigkeit, des sich wenigstens teilweise innerhalb des (durch den bzw. die Tiefensensor(en) überwachten) Arbeitsraums des Roboters befindenden Kraftfahrzeugs ermittelt. Entsprechend weist die Tankstelle, insbesondere ihre Steuerung, in einer Ausführung auf: Mittel zum Ermitteln des Typs und/oder von Positionen, insbesondere einer Geschwindigkeit, des sich wenigstens teilweise innerhalb des (durch den bzw. die Tiefensensor(en) überwachten) Arbeitsraums des Roboters befindenden Kraftfahrzeugs.

Hierdurch kann das Kraftfahrzeug, insbesondere auch bzw. nach seinem (wenigstens teilweisen) Eintritt aus dem Überwachungs- in den Arbeitsraum, (weiter) überwacht und der Roboter entsprechend gesteuert werden, insbesondere um eine (nun mögliche) Kollision mit dem Kraftfahrzeug zu vermeiden. Die Ermittlung des Typs des Kraftfahrzeugs, das sich innerhalb des Arbeitsraums des Roboters befindet, kann in einer Ausführung insbesondere die Präzision der Ermittlung verbessern.

In einer Weiterbildung wird ein Teil des Arbeitsraums des Roboters in Abhängigkeit von einer oder mehreren ermittelten Positionen, insbesondere einer ermittelten Geschwindigkeit, des sich wenigstens teilweise innerhalb des Arbeitsraums des Roboters befindenden Kraftfahrzeugs gesperrt, insbesondere ein Teil des Arbeitsraums, der eine aktuelle ermittelte Position und/oder eine auf Basis der aktuellen ermittelten Geschwindigkeit prognostizierte zukünftige Position des Kraftfahrzeugs wenigstens teilweise innerhalb des Arbeitsraums enthält.

Entsprechend weist die Tankstelle, insbesondere ihre Steuerung, in einer Ausführung auf: Mittel zum Sperren eines Teils des Arbeitsraums des Roboters in Abhängigkeit von einer oder mehreren ermittelten Positionen, insbesondere einer ermittelten Geschwindigkeit, des sich wenigstens teilweise innerhalb des Arbeitsraums des Roboters befindenden Kraftfahrzeugs, insbesondere eines Teils des Arbeitsraums, der eine aktuelle ermittelte Position und/oder eine auf Basis der aktuellen ermittelten Geschwindigkeit prognostizierte zukünftige Position des Kraftfahrzeugs wenigstens teilweise innerhalb des Arbeitsraums enthält.

In einer Ausführung wird der Roboter stillgesetzt oder ein bzw. der Teil des Arbeitsraums des Roboters gesperrt, falls bzw. solange eine ermittelte Geschwindigkeit des sich wenigstens teilweise innerhalb des Arbeitsraums des Roboters befindenden Kraftfahrzeugs einen vorgegebenen Mindestwert überschreitet, der in einer Weiterbildung höchstens 1 km/h beträgt, insbesondere wenigstens im Wesentlichen gleich Null ist. Mit anderen Worten kann in einer Ausführung ein Teil des Arbeitsraums des Roboters solange gesperrt werden, solange das Kraftfahrzeug sich wenigstens teilweise innerhalb des Arbeitsraums des Roboters mit einer den Mindestwert übersteigenden Geschwindigkeit, insbesondere überhaupt, bewegt.

Entsprechend weist die Tankstelle, insbesondere ihre Steuerung, in einer Ausführung auf: Mittel zum Stillsetzen des Roboters oder Sperren eines bzw. des Teils des Arbeitsraums des Roboters, falls bzw. solange eine ermittelte Geschwindigkeit des sich wenigstens teilweise innerhalb des Arbeitsraums des Roboters befindenden Kraftfahrzeugs einen vorgegebenen Mindestwert überschreitet, der in einer Weiterbildung höchstens 1 km/h beträgt, insbesondere wenigstens im Wesentlichen gleich Null ist.

In einer Ausführung umfasst das Verfahren den Schritt: Anfahren des Kraftfahrzeugs mit dem Roboter in Abhängigkeit von wenigstens einer ermittelten Position, insbesondere einer ermittelten Geschwindigkeit, des sich innerhalb des Arbeitsraums des Roboters befindlichen Kraftfahrzeugs, insbesondere (nur), falls die ermittelte Geschwindigkeit des Kraftfahrzeugs einen vorgegebenen Mindestwert nicht überschreitet, der in einer Weiterbildung höchstens 1 km/h beträgt, insbesondere wenigstens im Wesentlichen gleich Null ist.

Entsprechend weist die Tankstelle, insbesondere ihre Steuerung, in einer Ausführung auf: Mittel zum Anfahren des Kraftfahrzeugs mit dem Roboter in Abhängigkeit von wenigstens einer ermittelten Position, insbesondere einer ermittelten Geschwindigkeit, des sich innerhalb des Arbeitsraums des Roboters befindlichen Kraftfahrzeugs, insbesondere (nur), falls die ermittelte Geschwindigkeit des Kraftfahrzeugs einen vorgegebenen Mindestwert nicht überschreitet, der in einer Weiterbildung höchstens 1 km/h beträgt, insbesondere wenigstens im Wesentlichen gleich Null ist.

Mit anderen Worten wird in einer Ausführung zunächst detektiert, ob ein Kraftfahrzeug, wenigstens im Wesentlichen, stillsteht, und dieses (erst) anschließend mit dem Roboter angefahren, um es zu betanken bzw. aufzuladen. Hierdurch kann in einer Ausführung das Risiko einer Kollision reduziert werden.

Ein Teil eines Arbeitsraums eines Roboters wird bzw. ist in einer Ausführung dadurch (für den Roboter) gesperrt, dass eine Präsenz des Roboters in diesem (gesperrten) Teil steuerungstechnisch verhindert wird bzw. ist.

Ein Kraftfahrzeug befindet sich insbesondere im Sinne der vorliegenden Erfindung in einem bzw. innerhalb eines (Überwachungs-/Arbeits-)Raum(s), falls bzw. sobald es sich wenigstens teilweise bzw. mit wenigstens einem Teil(bereich) in diesem (Überwachungs-/Arbeits-)Raum befindet. Entsprechend befindet sich ein Kraftfahrzeug im Sinne der vorliegenden Erfindung insbesondere außerhalb eines (Überwachungs-/Arbeits-)Raums, falls bzw. solange es sich vollständig bzw. komplett außerhalb dieses (Überwachungs-/Arbeits-)Raum befindet bzw. sich nicht wenigstens teilweise bzw. nicht mit wenigstens einem Teil(bereich) in diesem (Überwachungs/Arbeits-)Raum befindet. Entsprechend wird unter einem Eintritt eines Kraftfahrzeugs in einen (Überwachungs-/Arbeits-)Raum insbesondere der Eintritt mit wenigstens einem Teil(bereich) des Kraftfahrzeugs bzw. das wenigstens teilweise Eindringen des Kraftfahrzeugs in diesen (Überwachungs-/Arbeits-)Raum verstanden.

In einer Ausführung umfasst das Verfahren die Schritte: Ermitteln einer Position einer Gegenschnittstelle, insbesondere einer Tank- bzw. Aufladeöffnung, des Kraftfahrzeugs zur Verbindung mit der robotergeführten Schnittstelle in Abhängigkeit von dem ermittelten Typ und wenigstens einer ermittelten Position des Kraftfahrzeugs, insbesondere eines oder mehrerer Merkmale des Kraftfahrzeugs; und Anfahren dieser Position der Gegenschnittstelle mit der robotergeführten Schnittstelle durch den Roboter.

Entsprechend weist die Tankstelle, insbesondere ihre Steuerung, in einer Ausführung auf: Mittel zum Ermitteln einer Position einer Gegenschnittstelle, insbesondere einer Tank- bzw. Aufladeöffnung, des Kraftfahrzeugs zur Verbindung mit der robotergeführten Schnittstelle, in Abhängigkeit von dem ermittelten Typ und wenigstens einer ermittelten Position des Kraftfahrzeugs, insbesondere eines oder mehrerer Merkmale des Kraftfahrzeugs; und Mittel zum Anfahren dieser Position der Gegenschnittstelle mit der robotergeführten Schnittstelle durch den Roboter.

Durch die Ermittlung einer Position des Kraftfahrzeugs, insbesondere eines oder mehrerer Merkmale des Kraftfahrzeugs wie beispielsweise einer Tür, Scheibe, eines Rades oder dergleichen, kann bei bekannter typspezifischer Anordnung der Gegenschnittstelle am Kraftfahrzeug und ermitteltem Kraftfahrzeugtyp in einfacher Weise die Position der Gegenschnittstelle relativ zum Roboter ermittelt und damit diese Position der Gegenschnittstelle mit der robotergeführten Schnittstelle durch den Roboter angefahren werden. Durch die Ermittlung von Positionen mehrerer Merkmale kann in einer Ausführung vorteilhaft eine Orientierung des Kraftfahrzeugs ermittelt werden.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere die Tankstelle betreiben, insbesondere deren Roboter steuern, kann.

In einer Ausführung werden einer oder mehrere der Verfahrensschritte, insbesondere durch die Tankstelle, insbesondere deren Steuerung, automatisiert durchgeführt.

Weitere Vorteile und Merkmale ergeben sich aus den Unteransprüchen und den Ausführungsbeispielen. Hierzu zeigt, teilweise schematisiert:
- Fig. 1:: einen Roboter einer Tankstelle nach einer Ausführung der vorliegenden Erfindung und ein Kraftfahrzeug;
- Fig. 2:: die Tankstelle mit dem Kraftfahrzeug beim Aufladen durch den Roboter; und
- Fig. 3:: den Ablauf eines Verfahrens nach einer Ausführung der vorliegenden Erfindung.

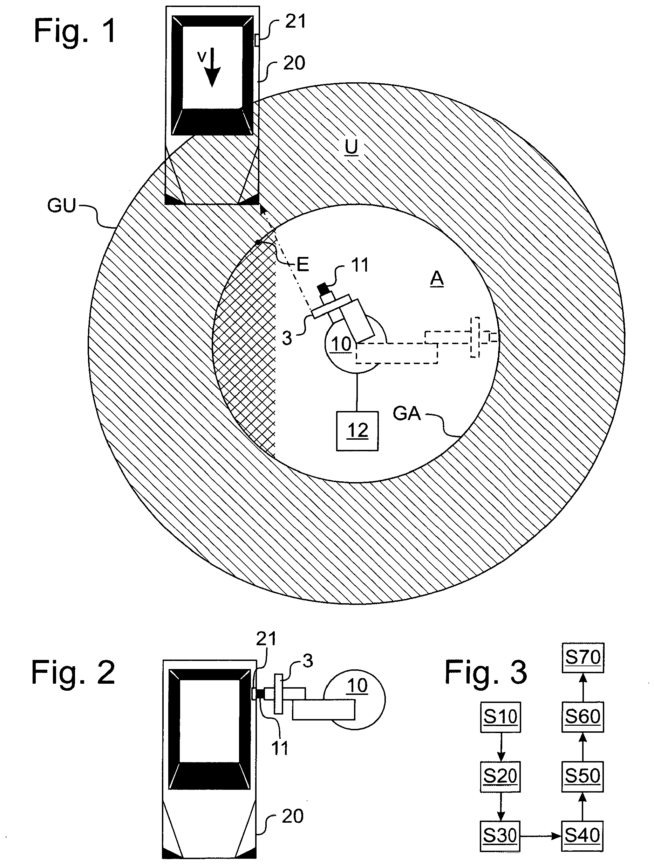

Fig. 1 zeigt einen Roboter 10 einer Tankstelle nach einer Ausführung der vorliegenden Erfindung und ein Kraftfahrzeug 20.

Der Roboter 10 wird durch eine Steuerung 12 gesteuert und weist eine Schnittstelle in Form eines Elektrosteckers 11 zum Verbinden mit einer Gegenschnittstelle in Form einer Aufladeöffnung 21 zum elektrischen Aufladen des Kraftfahrzeugs 20 auf.

In einer Abwandlung können die Schnitt- und Gegenschnittstelle zusätzlich oder alternativ auch ein(en) Tankstutzen bzw. eine Tanköffnung aufweisen, insbesondere sein.

In Fig. 1 ist schematisch ein Arbeitsraum A mit einer überwachungsraumzugewandten Außengrenze GA angedeutet, der der Roboter 10 bei maximaler Auslage, die in Fig. 1 gestrichelt angedeutet ist, abfahren kann. An diesen angrenzend ist schraffiert ein Überwachungsraum U mit einer arbeitsraumabgewandten Außengrenze GU angedeutet, der ebenso wie der Arbeitsraum A von einem robotergeführten Kinect-Tiefensensor 3 überwacht wird.

Der Überwachungsraum umschließt die für Kraftfahrzeuge zugängliche Außengrenze GA des Arbeitsraums A und reicht über diesen etwa 3 m hinaus.

Fig. 1 zeigt einen Zeitpunkt, zu dem das aufzuladende Kraftfahrzeug 20 sich bereits teilweise in dem Überwachungsraum U, jedoch noch vollständig außerhalb des Arbeitsraums A des Roboters 10 befindet, Fig. 2 einen späteren Zeitpunkt, zu dem das aufzuladende Kraftfahrzeug 20 sich wenigstens teilweise in dem (in Fig. 2 nicht mehr dargestellten) Arbeitsraum A des Roboters 10 befindet und dieser die robotergeführte Schnittstelle 11 an der Gegenschnittstelle 21 positioniert hat und dem Kraftfahrzeug 20 hierüber elektrische Energie zuführt.

Fig. 3 zeigt den Ablauf eines Verfahrens nach einer Ausführung der vorliegenden Erfindung.

In einem Schritt S10 ermittelt die Steuerung 12 mittels des Kinect-Tiefensensors 3 als bevorzugte Ausführungsform eines Tiefensensors mehrere zeitlich aufeinanderfolgende Positionen des Kraftfahrzeugs 20, das sich (noch) vollständig außerhalb des Arbeitsraums A des Roboters und bereits wenigstens teilweise in dem vom Kinect-Tiefensensor 3 überwachten Überwachungsraum U befindet, und hieraus eine Geschwindigkeit v des Kraftfahrzeugs 20.

Basierend auf einer aktuell ermittelten Position und Geschwindigkeit prognostiziert die Steuerung 12 in einem Schritt S20 einen Ort E und Zeitpunkt eines voraussichtlichen Eintritts des Kraftfahrzeugs 20 in den Arbeitsraum A des Roboters 10.

Eine vorgegebene Zeit vor diesem prognostizierten Zeitpunkt sperrt die Steuerung 12 in einem Schritt S30 einen in Fig. 1 kreuzschraffiert angedeuteten Teil des Arbeitsbereichs A für den Roboter 10, so dass das Kraftfahrzeug 20 gefahrlos in diesen einfahren kann.

In einem Schritt S40 ermittelt die Steuerung 12 mittels des Kinect-Tiefensensors 3 weiterhin mehrere zeitlich aufeinanderfolgende Positionen des Kraftfahrzeugs 20 und hieraus die jeweils aktuelle Geschwindigkeit v des Kraftfahrzeugs 20.

Sobald die Steuerung 12 in Schritt S40 einen tatsächlichen Eintritt des Kraftfahrzeugs 20 in den Arbeitsraum A des Roboters 10 bzw. eine Position des Kraftfahrzeugs 20 in dem Arbeitsraum A ermittelt, setzt sie den Roboter 10 still, beispielsweise nach Anfahren einer sicheren Pose.

In einem Schritt S50 erfasst die Steuerung 12 mittels des Kinect-Tiefensensors 3 einen Stillstand des Kraftfahrzeugs 20 in der in Fig. 2 gezeigten Parkposition. Hierzu ermittelt die Steuerung 12 in Schritt S50 weiterhin zeitlich aufeinanderfolgende Positionen des Kraftfahrzeugs 20, das sich wenigstens teilweise im Arbeitsbereich befindet, und ermittelt hieraus dessen aktuelle Geschwindigkeit v.

Zugleich ermittelt die Steuerung 12 in Schritt S50 (oder auch schon zuvor) mittels des Kinect-Tiefensensors 3 einen Typ des Kraftfahrzeugs 20, indem es typspezifische Merkmale wie eine Abmessung und Anordnung seiner Räder oder dergleichen ermittelt, mit abgespeicherten Mustern vergleicht und das Muster mit der größten Übereinstimmung als Kraftfahrzeugtyp ermittelt.

Basierend auf der in Schritt S50 ermittelten Parkposition des Kraftfahrzeugs 20 relativ zum Roboter 10 und einer in der Steuerung 12 abgespeicherten Anordnung der Gegenschnittstelle 21 am Kraftfahrzeug 20 für den ermittelten Fahrzeugtyp ermittelt die Steuerung 12 in Schritt S50 die Position der Gegenschnittstelle 21 relativ zum Roboter 10.

In einem Schritt S60 fährt die Steuerung 12 mittels des Roboters 10 diese Position der Gegenschnittstelle 21 mit der robotergeführten Schnittstelle 11 an, verbindet Schnittstelle 11 und Gegenschnittstelle 21 und führt dem Kraftfahrzeug 20 in einem Schritt S70 hierüber elektrische Energie zu.

Bereits ab Erfassung des Kraftfahrzeugs 20 im Überwachungsbereich U und/oder wenn das Kraftfahrzeug sich wenigstens teilweise im Arbeitsbereich A befindet, beispielsweise in Schritt S10, S40 und/oder S50, übermittelt die Steuerung 12 drahtlos Navigationsdaten an das Kraftfahrzeug 20, um dieses auf eine vorgesehene Parkposition zu leiten, beispielsweise mittels einer Steuerung des autonom( fahrenden Kraftfahrzeugs oder als Navigationshinweise für einen Fahrer des Kraftfahrzeugs 20.

Die Steuerung 12 kann wenigstens teilweise Mittel im Sinne der vorliegenden Erfindung aufweisen, insbesondere darstellen.

Obwohl in der vorhergehenden Beschreibung exemplarische Ausführungen erläutert wurden, sei darauf hingewiesen, dass eine Vielzahl von Abwandlungen möglich ist.

So kann insbesondere der Roboter 10 in einer nicht dargestellten Abwandlung eine oder mehrere, insbesondere proximale bzw. untergrundnächste, Linearachsen aufweisen, um an das geparkte Kraftfahrzeug 20 heranzufahren.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: Roboter
- 11: Schnittstelle
- 12: Steuerung
- 20: Kraftfahrzeug
- 21: Gegenschnittstelle
- 3: Kinect-Tiefensensor

- A: Arbeitsraum
- E: Eintrittsort
- GA: Außengrenze Arbeitsraum
- GU: Außengrenze Überwachungsraum
- U: Überwachungsraum
- v: Geschwindigkeit

## Patentansprüche

1. Verfahren zur Zufuhr von elektrischer Energie und/oder Kraftstoff zu wenigstens einem Kraftfahrzeug (20) mittels wenigstens eines Roboters (10) einer Tankstelle, mit den Schritten:
- Ermitteln (S10, S40, S50) mehrerer zeitlich aufeinanderfolgender Positionen des Kraftfahrzeugs (20) relativ zu dem Roboter (10) mittels wenigstens eines Tiefensensors (3), der robotergeführt oder fest oder lösbar oder verlagerbar mit einer Umgebung, insbesondere einer Struktur der Tankstelle, verbunden ist;
- Verbinden (S60) einer durch den Roboter (10) geführten Schnittstelle (11) mit dem Kraftfahrzeug (20); und
- Zuführen (S70) von elektrischer Energie und/oder Kraftstoff zu dem Kraftfahrzeug (20) über die mit diesem verbundene robotergeführte Schnittstelle (11);
wobei das Verfahren den Schritt aufweist:
- Steuern (S30, S40, S60) des Roboters (10) in Abhängigkeit von den ermittelten Positionen des Kraftfahrzeugs (20),
wobei Positionen des Kraftfahrzeugs (20), das sich vollständig außerhalb eines Arbeitsraums (A) des Roboters (10) und wenigstens teilweise in einem Überwachungsraum (U) befindet, der außerhalb des Arbeitsraums (A) angeordnet ist, und aus diesen eine Geschwindigkeit (v) des Kraftfahrzeugs (20) ermittelt werden, und ein Eintritt (E) des Kraftfahrzeugs (20) in den Arbeitsraum (A) des Roboters (10) in Abhängigkeit von wenigstens einer dieser ermittelten Positionen des Kraftfahrzeugs (20) in dem Überwachungsraum (U) und der aus diesen ermittelten Positionen ermittelten Geschwindigkeit des Kraftfahrzeugs (20) prognostiziert wird (S20), und das Steuern umfasst: Überführen des Roboters in einen sicheren Zustand, insbesondere Anfahren einer vorgegebenen Pose, Reduzieren einer Geschwindigkeit, insbesondere Stillsetzen, des Roboters und/oder Sperren (S30) eines Teils des Arbeitsraums (A) des Roboters, in Abhängigkeit von dem prognostizierten Eintritt, insbesondere dessen Zeitpunkt und/oder Ort (E).

2. Verfahren nach Anspruch 1, **dadurch gekennzeichnet, dass** das Verfahren aufweist: Übermitteln (S10, S40, S50) von Navigationsdaten zum Unterstützen eines Parkens des Kraftfahrzeugs an das Kraftfahrzeug (20) in Abhängigkeit von mittels des Tiefensensors (3) ermittelten Positionen.

3. Verfahren nach einem der vorhergehenden Ansprüche, **dadurch gekennzeichnet, dass** das Verfahren aufweist:
- Ermitteln (S10, S40, S50) eines Typs des Kraftfahrzeugs (20) mittels wenigstens eines Tiefensensors (3), wobei mittels dieses Tiefensensors insbesondere typspezifische Merkmale des Kraftfahrzeugs ermittelt und hieraus der Typ des Kraftfahrzeugs ermittelt werden, insbesondere durch den Tiefensensor die Abmessungen wenigstens eines typspezifischen Merkmals ermittelt und mit vorgegebenen Merkmalen verschiedener Kraftfahrzeugtypen verglichen und dann der Typ mit der größten Übereinstimmung als der Typ des zu betankenden bzw. aufzuladenden Kraftfahrzeugs ermittelt werden; und
- Steuern (S30, S40, S60) des Roboters (10) in Abhängigkeit von dem ermittelten Typ, insbesondere Ermitteln (S50) einer Position einer Gegenschnittstelle (21) des Kraftfahrzeugs (20) zur Verbindung mit der robotergeführten Schnittstelle (11) in Abhängigkeit von dem ermittelten Typ und wenigstens einer ermittelten Position des Kraftfahrzeugs und Anfahren (S60) dieser Position der Gegenschnittstelle (21) mit der robotergeführten Schnittstelle (11) durch den Roboter (10).

4. Verfahren nach dem vorhergehenden Anspruch, **dadurch gekennzeichnet, dass** der Typ des Kraftfahrzeugs (20) ermittelt wird, das sich vollständig außerhalb des Arbeitsraums (A) des Roboters (10) und wenigstens teilweise in dem Überwachungsraum (U), der außerhalb des Arbeitsraums (A) angeordnet ist, befindet oder das sich wenigstens teilweise innerhalb des Arbeitsraums (A) des Roboters (10) befindet.

5. Verfahren nach einem der vorhergehenden Ansprüche, **dadurch gekennzeichnet, dass** der Überwachungsraum (U) wenigstens teilweise an den Arbeitsraum (A) angrenzt und/oder diesen wenigstens teilweise umgibt und/oder eine arbeitsraumabgewandte Außengrenze (GU) aufweist, die von einer überwachungsraumzugewandten Außengrenze (GA) des Arbeitsraums (A) einen maximalen und/oder minimalen Abstand von wenigstens 0,1 m und/oder höchstens 10 m aufweist und/oder zu einem geometrischen Volumenmittelpunkt des Arbeitsraums (A) und/oder einer roboterfesten Referenz einen Abstand aufweist, der um wenigstens 0,1 m und/oder höchstens 10 m größer ist als ein Abstand einer überwachungsraumzugewandten Außengrenze (GA) des Arbeitsraums (A) zu dem Volumenmittelpunkt bzw. der roboterfesten Referenz.

6. Verfahren nach einem der vorhergehenden Ansprüche, **dadurch gekennzeichnet, dass** Positionen, insbesondere eine Geschwindigkeit (v), des Kraftfahrzeugs (20) ermittelt werden, das sich wenigstens teilweise innerhalb des Arbeitsraums (A) des Roboters (10) befindet.

7. Verfahren nach Anspruch 6, **gekennzeichnet durch** den Schritt: Stillsetzen (S40) oder Sperren eines Teils des Arbeitsraums (A) des Roboters (10) in Abhängigkeit von wenigstens einer ermittelten Position, insbesondere einer ermittelten Geschwindigkeit, des Kraftfahrzeugs (20) innerhalb des Arbeitsraums (A) des Roboters (10), insbesondere, falls die ermittelte Geschwindigkeit (v) des Kraftfahrzeugs (20) einen vorgegebenen Mindestwert überschreitet.

8. Verfahren nach Anspruch 6 oder 7, **gekennzeichnet durch** den Schritt: Anfahren (S60) des Kraftfahrzeugs (20) mit dem Roboter (10) in Abhängigkeit von wenigstens einer ermittelten Position, insbesondere einer ermittelten Geschwindigkeit, des Kraftfahrzeugs (20) innerhalb des Arbeitsraums (A) des Roboters (10), insbesondere, falls die ermittelte Geschwindigkeit (v) des Kraftfahrzeugs (20) einen vorgegebenen Mindestwert nicht überschreitet.

9. Tankstelle zur Zufuhr von elektrischer Energie und/oder Kraftstoff zu wenigstens einem Kraftfahrzeug (20) mittels wenigstens eines Roboters (10) der Tankstelle, die den Roboter, eine Steuerung (12) zum Steuern des Roboters (10), wenigstens einen Tiefensensor (3) und wenigstens eine robotergeführte Schnittstelle (11) aufweist und zur Durchführung eines Verfahrens nach einem der vorhergehenden Ansprüche eingerichtet ist.

10. Computerprogrammprodukt mit einem Programmcode, der auf einem von einem Computer lesbaren Medium gespeichert ist und Befehle umfasst, die bei Ausführen durch einen Computer eine Tankstelle nach Anspruch 9 dazu veranlassen, das Verfahren nach einem der Ansprüche 1 bis 8 auszuführen.

## Claims

1. A method of supplying electrical energy and / or fuel to at least one motor vehicle (20) by means of at least one robot (10) of a petrol station or charging station, wherein the method comprises the steps of:
- determining (S10, S40, S50) a plurality of temporally successive positions of the motor vehicle (20) with respect to the robot (10) by means of at least one depth sensor (3), which is guided by the robot, or which is fixedly or detachably or displaceably connected to an environment, in particular to a structure of the petrol station or charging station;
- connecting (S60), to the motor vehicle (20), an interface (11) which is guided by the robot (10); and
- supplying (S70) electrical energy and / or fuel to the motor vehicle (20) via the interface (11) which is connected thereto, and which is guided by the robot;
wherein the method comprises the step of:
- controlling (S30, S40, S60) the robot (10) as a function of the determined positions of the motor vehicle (20),
wherein positions of the motor vehicle (20), which is located completely outside a working space (A) of the robot (10) and at least partially in a monitoring space (U), which is arranged outside the working space (A), are determined, and a speed (v) of the motor vehicle (20) are determined from these positions, and an entry (E) of the motor vehicle (20) into the working space (A) of the robot (10) is predicted (S20) as a function of at least one of these determined positions of the motor vehicle (20) in the monitoring space (U) and from the speed of the motor vehicle (20) determined from these determined positions, and the controlling comprises: transferring the robot to a safe state, in particular moving to a predetermined pose, reducing a speed, in particular stopping, of the robot and / or blocking (S30) a part of the working space (A) of the robot, as a function of the predicted entry, in particular the time and / or location (E) thereof.

2. The method as claimed in claim 1, **characterised in that** the method comprises: transmitting (S10, S40, S50), to the motor vehicle (20), navigation data for supporting parking of the motor vehicle as a function of positions determined by means of the depth sensor (3).

3. The method as claimed in any one of the preceding claims, **characterised in that** the method comprises:
- determining (S10, S40, S50) a type of the motor vehicle (20) by means of at least one depth sensor (3), wherein in particular type-specific features of the motor vehicle are determined by means of this depth sensor, and the type of the motor vehicle is determined therefrom, in particular wherein the dimensions of at least one type-specific feature are determined by the depth sensor and compared with predetermined features of different types of motor vehicles and then the type with the greatest correspondence is determined as the type of the motor vehicle to be refuelled or to be recharged; and
- controlling (S30, S40, S60) the robot (10) as a function of the determined type, in particular determining (S50), as a function of the determined type and at least one determined position of the motor vehicle, a position of a mating interface (21) of the motor vehicle (20) for connection to the interface (11) guided by the robot, and moving (S60), by the robot (10), to this position of the mating interface (21) with the interface (11) guided by the robot.

4. The method as claimed in the preceding claim, **characterised in that** the type of the motor vehicle (20) is determined which is located completely outside the working space (A) of the robot (10) and at least partially in the monitoring space (U), which is arranged outside the working space (A), or which is located at least partially in the working space (A) of the robot (10).

5. The method according to any one of the preceding claims, **characterised in that** the monitoring space (U) at least partially borders onto the working space (A) and / or at least partially surrounds the latter and / or has an outer boundary (GU) facing away from the working space, which outer boundary (GU) has a maximum and / or minimum distance of at least 0.1 m and / or at most 10 m from an outer boundary (GA) of the working space (A) facing towards the monitoring space and / or has a distance from a geometric centre of volume of the working space (A) and / or from a reference fixed with respect to the robot which is greater by at least 0.1 m and / or at most 10 m than a distance of an outer boundary (GA) of the working space (A) facing towards the monitoring space from the centre of volume or from the reference fixed with respect to the robot.

6. The method as claimed in any one of the preceding claims, **characterised in that** positions, in particular a speed (v), of the motor vehicle (20) are determined, which motor vehicle (20) is located at least partially within the working space (A) of the robot (10).

7. The method as claimed in claim 6, **characterised by** the step of: stopping (S40) or blocking a part of the working space (A) of the robot (10) as a function of at least one determined position, in particular a determined speed, of the motor vehicle (20) within the working space (A) of the robot (10), in particular if the determined speed (v) of the motor vehicle (20) exceeds a predetermined minimum value.

8. The method as claimed in claim 6 or 7, **characterised by** the step of: moving (S60) the robot (10) towards the motor vehicle (20) as a function of at least one determined position, in particular a determined speed, of the motor vehicle (20) within the working space (A) of the robot (10), in particular if the determined speed (v) of the motor vehicle (20) does not exceed a predetermined minimum value.

9. A petrol station or charging station for supplying electrical energy and / or fuel to at least one motor vehicle (20) by means of at least one robot (10) of the petrol station or charging station, which comprises the robot, a controller (12) for controlling the robot (10), at least one depth sensor (3) and at least one interface (11) guided by the robot and which is set up for carrying out a method as claimed in any one of the preceding claims.

10. A computer program product comprising a program code which is stored on a medium which can be read by a computer, and which comprises instructions which, when it is being executed by a computer, cause a petrol station or charging station as claimed in claim 9 to carry out the method as claimed in any one of claims 1 to 8.

## Revendications

1. Procédé d'alimentation d'au moins un véhicule à moteur (20) en énergie électrique et/ou en carburant au moyen d'au moins un robot (10) d'une station-service, avec les étapes :
- de détermination (S10, S40, S50) de plusieurs positions se suivant les unes les autres dans le temps du véhicule à moteur (20) par rapport au robot (10) au moyen d'au moins un capteur de profondeur (3), qui est relié de manière guidée par le robot ou de manière solidaire ou de manière amovible ou de manière mobile à un environnement extérieur, en particulier à une structure de la station-service ;
- de liaison (S60) d'une interface (11) guidée par le robot (10) au véhicule à moteur (20) ; et
- d'alimentation (S70) du véhicule à moteur (20) en énergie électrique et/ou en carburant par l'intermédiaire de l'interface (11) guidée par le robot, reliée à celui-ci ; dans lequel le procédé présente l'étape :
- de commande (S30, S40, S60) du robot (10) en fonction des positions déterminées du véhicule à moteur (20),
dans lequel des positions du véhicule à moteur (20), qui se trouve en totalité à l'extérieur d'un espace de travail (A) du robot (10) et au moins en partie dans un espace de surveillance (U), qui est disposé à l'extérieur de l'espace de travail (A), sont déterminées et une vitesse (v) du véhicule à moteur (20) est déterminée à partir de celles-ci, et une entrée (E) du véhicule à moteur (20) dans l'espace de travail (A) du robot (10) est prédite (S20) en fonction d'au moins une desdites positions déterminées du véhicule à moteur (20) dans l'espace de surveillance (U) et de la vitesse du véhicule à moteur (20) déterminée à partir desdites positions déterminées, et la commande comprend : le transfert du robot dans un état sûr, en particulier l'atteinte d'une pose prédéfinie, la réduction d'une vitesse, en particulier l'arrêt du robot et/ou le blocage (S30) d'une partie de l'espace de travail (A) du robot en fonction de l'entrée prédite en particulier de son moment et/ou emplacement (E).

2. Procédé selon la revendication 1, **caractérisé en ce que** le procédé présente : la transmission (S10, S40, S50) de données de navigation pour assister un stationnement du véhicule à moteur au véhicule à moteur (20) en fonction de positions déterminées au moyen du capteur de profondeur (3) .

3. Procédé selon l'une quelconque des revendications précédentes, **caractérisé en ce que** le procédé présente :
- la détermination (S10, S40, S50) d'un type du véhicule à moteur (20) au moyen d'au moins un capteur de profondeur (3), dans lequel des caractéristiques du véhicule à moteur spécifiques au type en particulier sont déterminées au moyen dudit capteur de profondeur et le type du véhicule à moteur est déterminé sur cette base, en particulier les dimensions d'au moins une caractéristique spécifique au type sont déterminées par le capteur de profondeur et sont comparées à des caractéristiques prédéfinies de différents types de véhicule à moteur, puis le type présentant la plus grande concordance est déterminé comme le type du véhicule à moteur à ravitailler ou à charger ; et
- la commande (S30, S40, S60) du robot (10) en fonction du type déterminé, en particulier la détermination (S50) d'une position d'une contre-interface (21) du véhicule à moteur (20) destinée à être reliée à l'interface (11) guidée par le robot en fonction du type déterminé et d'au moins une position déterminée du véhicule à moteur et l'atteinte (S60) de cette position de la contre-interface (21) avec l'interface (11) guidée par le robot par le robot (10) .

4. Procédé selon la revendication précédente, **caractérisé en ce que** le type du véhicule à moteur (20) est déterminé, lequel est disposé en totalité à l'extérieur de l'espace de travail (A) du robot (10) et au moins en partie dans l'espace de surveillance (U), qui est disposé à l'extérieur de l'espace de travail (A), ou qui se trouve au moins en partie à l'intérieur de l'espace de travail (A) du robot (10) .

5. Procédé selon l'une quelconque des revendications précédentes, **caractérisé en ce que** l'espace de surveillance (U) jouxte au moins en partie l'espace de travail (A) et/ou entoure au moins en partie celui-ci et/ou présente une limite extérieure (GU) opposée à l'espace de travail, qui présente une distance maximale et/ou minimale d'au moins 0,1 m et/ou de 10 m au maximum d'une limite extérieure (GA), tournée vers l'espace de surveillance, de l'espace de travail (A) et/ou présente, par rapport à un centre volumique géométrique de l'espace de travail (A) et/ou à une référence solidaire du robot, une distance, qui est supérieure d'au moins 0,1 m et/ou de 10 m au maximum à une distance d'une limite extérieure (GA), tournée vers l'espace de surveillance, de l'espace de travail (A) par rapport au centre volumique ou à la référence solidaire du robot.

6. Procédé selon l'une quelconque des revendications précédentes, **caractérisé en ce que** des positions, en particulier une vitesse (v), du véhicule à moteur (20) qui se trouve au moins en partie à l'intérieur de l'espace de travail (A) du robot (10) sont déterminées.

7. Procédé selon la revendication 6, **caractérisé par** l'étape : d'arrêt (S40) ou de blocage d'une partie de l'espace de travail (A) du robot (10) en fonction d'au moins une position déterminée, en particulier d'une vitesse déterminée, du véhicule à moteur (20) à l'intérieur de l'espace de travail (A) du robot (10), en particulier si la vitesse (v) déterminée du véhicule à moteur (20) dépasse une valeur minimale prédéfinie.

8. Procédé selon la revendication 6 ou 7, **caractérisé par** l'étape : de démarrage (S60) du véhicule à moteur (20) avec le robot (10) en fonction d'au moins une position déterminée, en particulier d'une vitesse déterminée, du véhicule à moteur (20) à l'intérieur de l'espace de travail (A) du robot (10), en particulier si la vitesse (v) déterminée du véhicule à moteur (20) ne dépasse pas une valeur minimale prédéfinie.

9. Station-service destinée à alimenter au moins un véhicule à moteur (20) en énergie électrique et/ou en carburant au moyen d'au moins un robot (10) de la station-service, qui présente le robot, une commande (12) destinée à commander le robot (10), au moins un capteur de profondeur (3) et au moins une interface (11) guidée par le robot et qui est mise au point pour mettre en oeuvre le procédé selon l'une quelconque des revendications précédentes.

10. Produit-programme informatique avec un code de programme, qui est stocké sur un support lisible par un ordinateur et comprend des instructions, qui amènent, lors de l'exécution par un ordinateur, une station-service selon la revendication 9 à exécuter le procédé selon l'une quelconque des revendications 1 à 8.
